# EUROPÄISCHE PATENTANMELDUNG

(11) **EP 1 716 816 A1**
(43) Veröffentlichungstag der Anmeldung: **02.11.2006**
(21) Anmeldenummer: 06113179.3
(22) Anmeldetag: 27.04.2006
(51) Int. Cl.: A61C 1/00, A61C 13/00

(54) **Vorrichtung und Verfahren zum Betrieb mit einem handgehaltenen zahnärztlichen Instrument**

(30) Priorität: 28.04.2005 DE 102005020240
(71) Anmelder: Sirona Dental Systems GmbH, 64625 Bensheim (DE)
(72) Erfinder: Eiff, Wolfgang, 64646, Heppenheim (DE); Fornoff, Peter, 64385, Reichelsheim (DE)
(74) Vertreter: Sommer, Peter

(57) **Zusammenfassung**

Die Erfindung betrifft eine Vorrichtung zum Betrieb mit einem handgehaltenen zahnärztlichen Instrument, bei dem eine Funktion des Instruments durch einen Bediener mittels einer Auslöseeinrichtung ausgelöst wird, wobei die Vorrichtung eine Verzögerungsschaltung enthält, die eine Zeitverzögerung zwischen Auslösung und Aktivierung der Funktion bewirkt.

Weiterhin betrifft die Erfindung ein Verfahren zum Betrieb eines handgehaltenen zahnärztlichen Instruments, bei dem eine Funktion des Instruments durch einen Bediener mittels einer Auslöseeinrichtung ausgelöst wird, wobei die Auslösung eine Verzögerungsschaltung in Betrieb setzt, die die Aktivierung der gewünschten Funktion zeitverzögert vornimmt.

## Beschreibung

### Technisches Gebiet

Die Erfindung betrifft eine Vorrichtung, die mit einem handgehaltenen zahnärztlichen Instrument betrieben werden, sowie ein Verfahren zur Aktivierung einer Funktion des Instruments, wobei die Funktion mittels einer Auslöseeinrichtung durch den Bediener ausgelöst wird.

### Stand der Technik

Aus der DE 198 29 278 C1 ist ein handgehaltenes zahnärztliches Instrument zur dreidimensionalen Erfassung von Oberflächenstrukturen bekannt, welches auf Auslösung eine Höhenvermessung startet.

Die Vermessung muss bei dem patentgemäß offenbarten Instrument ebenso wie andere Funktionen bei anderen bekannten handgehaltenen zahnärztlichen Instrumenten durch den Bediener ausgelöst werden. Hierzu kann er sich gegebenenfalls vorhandener Mittel am Instrument oder, sofern vorgesehen, einem Fußschalter bedienen. Die Bedienung über das Instrument selbst hat durch die Krafteinwirkung auf das Instrument oft ein Verwackeln zur Folge, so dass die durchzuführende Funktion, also beispielsweise eine intraorale dreidimensionale Vermessung, gegebenenfalls ungenau wird. Bei der Bedienung über den Fußschalter ist der Bediener ebenfalls dazu gezwungen, seine Aufmerksamkeit kurz von der korrekten Positionierung des Instruments zu lösen, was zu einer ungewollten Fehlpositionierung des Instruments führen kann.

Es stellt sich also die Aufgabe, eine Möglichkeit bereitzustellen, mit der das durch die Auslösung einer Funktion verursachte Wackeln bei einem handgehaltenen zahnärztlichen Instrument nicht zu einer fehlerhaften Durchführung der Funktion führt.

### Offenbarung der Erfindung

Erfindungsgemäß enthält die Vorrichtung, die mit einem handgehaltenen zahnärztlichen Instrument betrieben wird, eine Funktion mittels einer Auslöseeinrichtung, die durch den Bediener ausgelöst wird, eine Verzögerungsschaltung, die eine Zeitverzögerung zwischen Auslösung und Aktivierung der Funktion bewirkt.

Dies hat den Vorteil, dass der Bediener des Instruments nach der Auslösung der Funktion noch einmal die Möglichkeit hat, sein Instrument korrekt zu positionieren, bevor die Funktion aktiviert wird.

Vorteilhafterweise ist die Zeitverzögerung in einem Zeitintervall von 0,5 bis 5 Sekunden einstellbar. Der Bediener hat dann die Möglichkeit, die Zeitverzögerung seinen individuellen Bedürfnissen anzupassen.

Vorteilhafterweise sind Mittel vorhanden, die die verbleibende Restzeit bis zur Aktivierung der Funktion signalisieren. Dies verbessert die Einschätzbarkeit der bis zur Auslösung der Funktion verbleibenden Zeit.

Besonders vorteilhafterweise wird die Restzeit durch ein akustisches Signal angezeigt. Dies kann beispielsweise durch eine Frequenzänderung oder einen sich ändernden Rhythmus des akustischen Signals geschehen. Ein akustisches Signal hat den Vorteil, dass der Bediener das Signal unabhängig von seiner Blickrichtung wahrnehmen kann.

Alternativ oder ergänzend kann es vorteilhaft sein, wenn die Restzeit durch ein optisches Signal dargestellt wird. Eine optische Darstellung der verbleibenden Restzeit lässt sich mit geringem Aufwand, z.B. durch eine Anordnung von Dioden oder durch einen Laufbalken auf einer graphischen Anzeigeeinrichtung, realisieren.

Besonders vorteilhaft ist es, wenn das optische Signal im direkten Blickfeld des Bedieners liegt. Die Wahrnehmung des Signals wird dadurch wesentlich vereinfacht.

Vorteilhafterweise ist das Mittel zur Darstellung des optischen Signals am Instrument angebracht. Das Instrument liegt bei der Benutzung oftmals im momentanen Blickfeld des Bedieners.

Eine besonders vorteilhafte Verbindung stellt die Kombination der Vorrichtung mit einer intraoralen Vermessungseinrichtung dar. Diese Kameras sind prinzipbedingt empfindlich gegenüber Veränderungen des Aufnahmeausschnitts.

Vorteilhafterweise wird das optische Signal bei der Verwendung mit einer intraoralen Vermessungseinrichtung an einer Bildwiedergabeeinheit eingeblendet. Diese Bildwiedergabeeinheit dient zur Positionierung der Vermessungseinrichtung und liegt somit im Blickfeld des Bedieners.

Weiterhin betrifft die Erfindung ein Verfahren zum Betrieb eines handgehaltenen zahnärztlichen Instruments, bei dem eine Funktion des Instruments durch den Bediener mittels einer Auslöseeinrichtung aktiviert wird. Nach der Auslösung wird eine Verzögerungsschaltung in Betrieb gesetzt, die die Aktivierung der gewünschten Funktion zeitverzögert vornimmt. Dies hat den Vorteil, dass sich die Auslösung und die Aktivierung einer Funktion entkoppeln lassen.

### Kurze Beschreibung der Zeichnungen

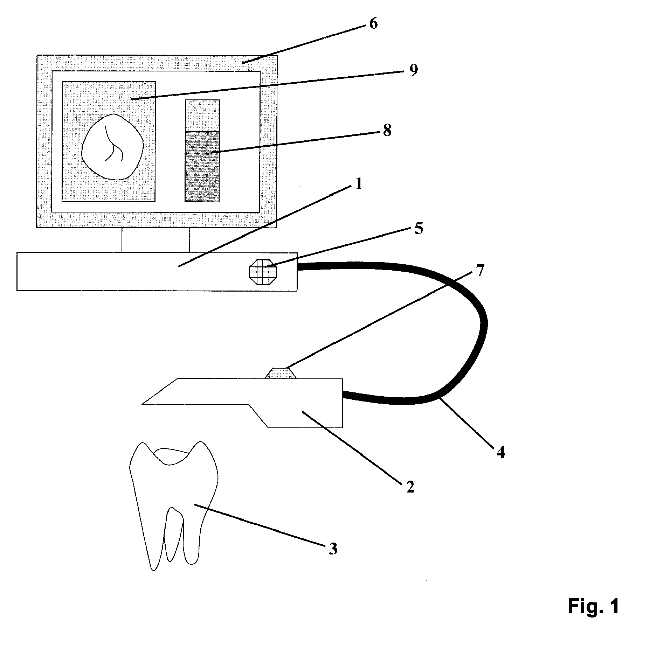

Das erfindungsgemäße Verfahren wird anhand der Zeichnung erläutert. Fig. 1 zeigt eine erfindungsgemäße Vorrichtung.

### Ausführungsform der Erfindung

Die Fig. 1 zeigt eine erfindungsgemäße Vorrichtung 1, die mit einer handgehaltenen intraoralen Vermessungseinrichtung 2, die zur Vermessung eines Zahnes 3 verwendet wird, betrieben wird. Das zahnärztliche Instrument 2 ist dazu mit dem Kabel 4 mit der Vorrichtung 1 verbunden. Die Vorrichtung 1 steuert den Lautsprecher 5 sowie den an die Vorrichtung angeschlossenen Monitor 6, die zur Anzeige der Restzeit bis zur Aktivierung der Funktion dienen.

Löst der Bediener der intraoralen Vermessungseinrichtung 2 mittels des Auslöseknopfs 7 eine Funktion aus, beispielsweise eine Vermessung des Zahns 3, so wird ein Signal an die Vorrichtung 1 übermittelt, das eine in der Vorrichtung 1 enthaltene Verzögerungsschaltung aktiviert. Die Verzögerungsdauer ist durch nicht dargestellte Mittel auf die individuellen Bedürfnisse des Bedieners in einem Bereich von 0,5 bis 5 Sekunden einstellbar.

Die verbleibende Restzeit wird dem Bediener durch ein über den Lautsprecher 5 abgegebenes Tonsignal mit einem sich zeitlich verändernden Rhythmus angegeben. Alternativ ist es auch möglich, die Tonhöhe zu ändern.

Darüber hinaus wird die verbleibende Restzeit auf dem Monitor 6 mittels des Laufbalkens 8 dargestellt, in dem der Laufbalken 8 mit der Zeit abnimmt oder bis zu einer vorgegebenen Grenze zunimmt. Die genaue graphische Ausgestaltung des Laufbalkens ist dabei unerheblich.

Zusätzlich wird noch ein Livebild 9 des von der handgehaltenen intraoralen Vermessungseinrichtung 2 aufzunehmenden Bereichs auf dem Monitor 6 dargestellt, wodurch es dem Bediener gleichzeitig ermöglicht wird, den zu vermessenden Bereich des Zahnes 3 und die bis zur Aktivierung der Funktion verbleibende Restzeit in seinem direkten Blickfeld einzusehen.

Alternativ kann ein optisches Signal an der handgehaltenen intraoralen Vermessungseinrichtung 2 die Anzeige der bis zur Auslösung verbleibenden Restzeit übernehmen.

## Patentansprüche

1. Vorrichtung zum Betrieb mit einem handgehaltenen zahnärztlichen Instrument (2), bei dem eine Funktion des Instruments (2) durch einen Bediener mittels einer Auslöseeinrichtung (7) ausgelöst wird, **dadurch gekennzeichnet, dass** die Vorrichtung (1) eine Verzögerungsschaltung enthält, die eine Zeitverzögerung zwischen Auslösung und Aktivierung der Funktion bewirkt.

2. Vorrichtung nach Anspruch 1, **dadurch gekennzeichnet, dass** die Zeitverzögerung in einem Zeitintervall zwischen 0,5 und 5 Sekunden einstellbar ist.

3. Vorrichtung nach Anspruch 1 oder 2, **dadurch gekennzeichnet, dass** Mittel (5, 8) vorhanden sind, die die verbleibende Restzeit bis zur Aktivierung der Funktion signalisieren.

4. Vorrichtung nach Anspruch 3, **dadurch gekennzeichnet, dass** die Mittel (5) ein akustisches Signal erzeugen.

5. Vorrichtung nach Anspruch 3, **dadurch gekennzeichnet, dass** die Mittel (8) ein optisches Signal erzeugen.

6. Vorrichtung nach Anspruch 5, **dadurch gekennzeichnet, dass** das optische Signal im direkten Blickfeld des Bedieners liegen.

7. Vorrichtung nach Anspruch 6, **dadurch gekennzeichnet, dass** Mittel zur Darstellung des optischen Signals am Instrument (2) angebracht sind.

8. Vorrichtung nach einem der Ansprüche 1 bis 7, **dadurch gekennzeichnet, dass** die Vorrichtung (1) in Kombination mit einer intraoralen Vermessungseinrichtung (2) betrieben wird.

9. Vorrichtung nach Anspruch 8, **dadurch gekennzeichnet, dass** ein optisches Signal an einer Bildwiedergabeeinheit (6) eingeblendet wird.

10. Verfahren zum Betrieb eines handgehaltenen zahnärztlichen Instruments (2), bei dem eine Funktion des Instruments (2) durch einen Bediener mittels einer Auslöseeinrichtung (7) ausgelöst wird, **dadurch gekennzeichnet, dass** die Auslösung eine Verzögerungsschaltung in Betrieb setzt, die die Aktivierung der gewünschten Funktion zeitverzögert vornimmt.
